# EUROPÄISCHE PATENTSCHRIFT

(11) **EP 0 403 860 B1**
(45) Veröffentlichungstag und Bekanntmachung des Hinweises auf die Patenterteilung: **28.12.1994**
(21) Anmeldenummer: 90110432.3
(22) Anmeldetag: 01.06.1990
(51) Int. Cl.: G11B 15/43, G11B 15/44, G11B 15/093

(54) **Anordnung zur Bandstraffung bei einem Kassettentonbandgerät für Reversebetrieb**
Tape tightening assembly in an audio tape-cassette apparatus for reverse operation
Assemblage pour tendre la bande d'un appareil à bande audio en cassette pour fonctionnement en inversion

(30) Priorität: 22.06.1989 DE 3920395
(43) Veröffentlichungstag der Anmeldung: 27.12.1990
(73) Patentinhaber: Blaupunkt-Werke GmbH, 31132 Hildesheim (DE)
(72) Erfinder: Hapke, Walter, D-3200 Hildesheim (DE)

(56) Entgegenhaltungen:
- DE-A- 3 032 650
- GB-A- 2 059 663
- US-A- 3 883 893
- US-A- 3 932 890
- US-A- 4 209 145
- PATENT ABSTRACTS OF JAPAN vol. 12, no. 43 (P-664)(2890) 09 Februar 1988,& JP-A-62 189658 (MATSUSHITA ELECTRIC IND. CO. LTD.) 19 August 1987,

## Beschreibung

Die Erfindung betrifft eine Anordnung zur Bandstraffung bei einem Kassettentonbandgerät für Reversebetrieb nach dem Oberbegriff des Patentanspruchs 1.

Bei Kassetten, die in Kassettentonbandgeräten benutzt werden, kommt es immer wieder vor, daß sich die Bandwickel lose rütteln, wodurch es kurz nach dem Einschieben der Kassette in das Tonbandgerät zu Funktionsstörungen infolge einer Bandschlaufenbildung kommen kann.

Zur Vermeidung der Bildung von Bandschlaufen ist es bekannt, nach dem Einführen der Kassette zunächst einen Wickelteller zu verriegeln, der durch die Tonkopfträger nach einer erfolgten Bandstraffung wieder freigegeben wird. Derartige bekannte Anordnungen sind jedoch sehr aufwendig.

Aus der US PS 3 932 890 ist es auch bekannt, zunächst nur den Aufnahmewikkelteller anzutreiben, bis die Bandschlaufe beseitigt ist.

Der Erfindung lag die Aufgabe zugrunde, eine neue wenig aufwendige und sichere Anordnung zur Bandstraffung bei einem Kassettentonbandgerät zu schaffen.

Diese Aufgabe wird bei einer gattungsgemäßen Anordnung durch die im kennzeichnenden Teil des Anspruchs 1 angegebenen Maßnahmen gelöst.

Die mit der Erfindung erzielten Vorteile bestehen insbesondere darin, daß keine spezielle und damit aufwendige Vorrichtung benötigt wird und daß ohnehin vorhandene Funktionen des Laufwerkes zur Bandstraffung genutzt werden.

Durch die in den Unteransprüchen aufgeführten Maßnahmen sind vorteilhafte Ausgestaltungen der Anordnung möglich.

Ein Ausführungsbeispiel der Erfindung ist in der Zeichnung dargestellt und wird im folgenden näher beschrieben

Es zeigen:
Figur 1 eine prinzipielle Darstellung der Anordnung mit den für die Bandstraffung relevanten Elementen in der Position, die von der Kassette angetroffen wird, nachdem sie eingeschoben wurde,
Figur 2 eine Teilzeichnung eines Reverseschiebers und eines Tonkopfträgers in Seitenansicht und
Figur 3 eine Teilzeichnung des Reverseschiebers und des Tonkopfschiebers in Vorderansicht.

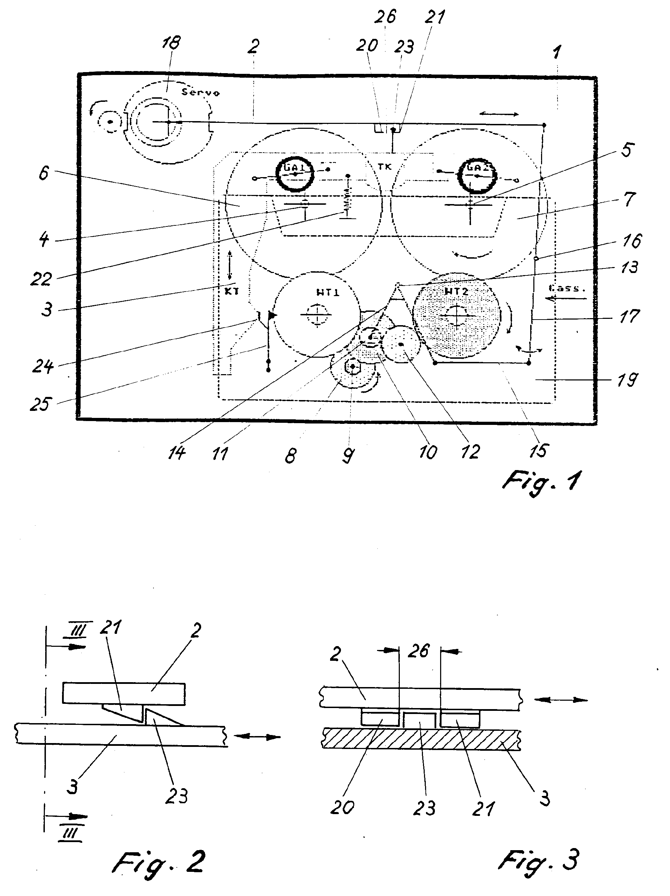

Auf einem in der Figur 1 angedeuteten Chassis 1 sind ein Reverseschieber 2, ein mit einem Tonkopf TK versehener, senkrecht zum Reverseschieber 2 verschiebbarer Tonkopfträger 3, zwei auf Capstan-Wellen 4, 5 angebrachte, gegensinnig angetriebene Schwungscheiben 6, 7, zwei Wickelteller WT1, WT2 und über eine Rutschkupplung 8 antreibbare Zahnräder 9, 10, 11 sowie ein mit dem Wickelteller WT2 dauernd im Eingriff stehendes Zwischenrad 12 angeordnet. Die auf einer gemeinsamen Welle angeordneten Zahnräder 10, 11 sind auf einem Rebelarm eines in einem Drehpunkt 13 am Chassis 1 schwenkbar gelagerten V-förmigen Hebels 14 angeordnet. Der andere Hebelarm des V-förmigen Hebels 14 ist über ein Gelenkstück 15 mit einem Hebelarm eines in einem Drehpunkt 16 am Chassis 1 schwenkbar gelagerten zweiarmigen Hebels 17 gelenkig verbunden, dessen zweiter Hebelarm mit dem Reverseschieber 2 gelenkig verbunden ist. Der Reverseschieber 2 ist von einem elektromechanisch koppelbaren Servogetriebe 18 in seine beiden Schaltstellungen umschaltbar.

Die Figur 1 zeigt die Anordnung in der für die Bandstraffung relevanten Ausgangsposition, die nach dem Einschieben der Kassette 19 vorliegt. Der Reverseschieber 2 befindet sich hierbei in einer Schaltstellung, in der er über den Hebel 17, über das Gelenkstück 15 und über den V-förmigen Hebel 14 das Zahnrad 11 mit dem Zwischenrad 12 in Eingriff bringt und damit einen Antrieb des Wickeltellers WT2 gemäß der markierten Drehrichtung bewirkt.

Der Reverseschieber 2 ist mit zwei in seiner Bewegungsrichtung fluchtend angeordneten, in einem geringen Abstand voneinander entfernten Rastnasen 20, 21 versehen. Der durch eine Feder 22 gegen die Kassette 19 vorgespannte Tonkopfträger 3 weist einen den Rastnasen 20, 21 zugeordneten Vorsprung 23 auf, dessen Breite geringer als der Abstand der Rastnasen 20, 21 bemessen ist. Ein weiterer am Tonkopfträger 3 vorgesehener Vorsprung 24 drückt in der Ruhelage des Tonkopfträgers 3 eine Verrriegelungsfeder 25 entgegen ihrer Federkraft in die Verzahnung des Wickeltellers WT1 und verriegelt diesen. Während der Wickelteller WT2 nach dem Absenken der Kassette 19 in die Spielposition damit beginnt, eine eventuell vorhandene Bandschlaufe aufzuwickeln, kann der durch eine nicht dargestellte Steuerkurve freigegebene Tonkopfträger noch nicht in seine Arbeitsstellung gelangen, da sein Vorsprung 23 von der Rastnase 21 des Reverseschiebers 2 gehalten wird.

Da die Wickelteller mit nicht dargestellten Impulsgebern versehen sind, die bei einem Stillstand beider Wickelteller über eine elektromechanische Servosteuerung eine Umschaltung des Rerverseschiebers 2 bewirken, passiert die Lücke 26 zwischen den beiden Rastnasen 20, 21 den Vorsprung 23. Dadurch wird der Tonkopfträger 3 freigegeben und mittels der Feder 22 in seine Arbeitsstellung gebracht, in der er den Tonkopf mit dem Tonband in Berührung bringt, die Gummiandruckrolle GA1 bzw. GA2 freigibt und die Verriegelung des Wickeltellers WT1 über den weiteren Vorsprung 24 aufhebt. Damit ist die Bandstraffung abgeschlossen und das Laufwerk befindet sich im normalen Betriebszustand.

Bei einer vorteilhaften Ausgestaltung der Anordnung ist der Reverseschieber 2 aus einem elastischen Kunststoff hergestellt und seine Rastnasen 20, 21 sind nach den Figuren 2 und 3 mit Schrägen versehen. Auch der am Tonkopfträger 3 angeordnete Vorsprung 23 weist eine Schräge auf. Die Schrägen sind derart angeordnet, daß die Rastnasen 20, 21 bei Verbringen des Tonkopfträgers 3 von der Betriebslage in die Ruhelage vom Vorsprung 23 des Tonkopfträgers 3 federnd ausgelenkt werden, so daß der Vorsprung 23 die jeweilige Rastnase 20 oder 21 in der einen Richtung ungehindert passieren kann.

## Patentansprüche

1. Anordnung zur Bandstraffung bei einem Cassettentonbandgerät für Reversebetrieb mit einer von der Stellung des Tonkopfträgers (3) abhängigen Verriegelung eines Wickeltellers und mit Schaltmitteln (18), die bei einem Stillstand beider Wickelteller (WT1, WT2) eine Umschaltung eines die Laufrichtung vorgebenden Reverseschiebers (2) bewirken und nach der Umschaltung den Tonkopfträger in seine Betriebslage bringen,
dadurch gekennzeichnet,
daß der Reverseschieber (2) zwei in seiner Bewegungsrichtung fluchtend angeordnete, in einem geringen Abstand voneinander entfernte Rastnasen (20, 21) aufweist, daß der senkrecht zum Reverseschieber (2) verschiebare, durch eine Feder (22) gegen die Cassette (19) vorgespannte Tonkopfträger (3) mit einem den Rastnasen (20, 21) zugeordneten Vorsprung versehen ist, der nach einer vor Spielbeginn erfolgten Freigabe des Tonkopfträgers zunächst von einer der Rastnasen gehalten wird und daß bei einer nach erfolgter Bandstraffung durch Stillstand beider Wickelteller (WT1, WT2) bewirkten Umschaltung des Reverseschiebers der Vorsprung des Tonkopfträgers den Halt an der Rastnase verliert, wodurch der Tonkopfträger mittels der Feder (22) auch die Verriegelung des Wickeltellers (WT1) auflöst.

2. Anordnung zur Bandstraffung nach Anspruch 1,
dadurch gekennzeichnet,
daß der aus einem elastischen Kunststoff hergestellte Reverseschieber (2) derart bemessen und gelagert ist, daß seine mit Schrägen versehenen Rastnasen (20, 21) beim Verbringen des Tonkopfträgers (3) von der Betriebslage in die Ruhelage beim Passieren des am Tonkopfträger (3) angeordneten Vorsprungs (23) von diesem federnd ausgelenkt werden.

3. Anordnung zur Bandstraffung nach Anspruch 1 oder 2,
dadurch gekennzeichnet,
daß der Tonkopfträger (3) mit einem weiteren Vorsprung (24) versehen ist, der in der Ruhelage des Tonkopfträgers eine Verriegelungsfeder (25) entgegen ihrer Federkraft in die Verzahnung des zu verriegelnden Wickeltellers (WT1) drückt.

## Claims

1. Tape-tightening assembly in an audiotape-cassette apparatus for reverse operation, having a hub locking mechanism dependent on the position of the audio head support (3) and having switching means (18) which, when both hubs (WT1, WT2) are at a standstill, effect a switching over of a reverse slide (2), determining the running direction, and, after the switching over, bring the audio head support into its operating position, characterized in that the reverse slide (2) has two detents (20, 21) arranged in line with its direction of movement and at a small distance away from each other, in that the audio head support (3), which can be displaced perpendicularly with respect to the reverse slide (2) and is prestressed by a spring (22) against the cassette (19), is provided with a projection which is assigned to the detents (20, 21) and, after a release of the audio head support performed before the beginning of play, is initially held by one of the detents and in that when there is a switching over of the reverse slide, effected after tape tightening has been performed by both hubs (WT1, WT2) being at a standstill, the projection of the audio head support loses retention at the detent, as a result of which the audio head support also triggers the locking of the hub (WT1) by means of the spring (22).

2. Tape-tightening assembly according to Claim 1, characterized in that the reverse slide (2), produced from a flexible plastic, is dimensioned and mounted in such a way that its detents (20, 21), provided with slopes, are resiliently deflected by the projection (23), arranged on the audio head support (3), upon passing the said projection when the audio head support (3) is brought from the operating position into the rest position.

3. Tape-tightening assembly according to Claim 1 or 2, characterized in that the audio head support (3) is provided with a further projection (24), which in the rest position of the audio head support presses a locking spring (25) against its spring force into the toothing of the hub (WT1) to be locked.

## Revendications

1. Dispositif pour tendre la bande d'un magnétophone à cassette en fonctionnement réversible, avec un verrouillage d'un plateau d'enroulement dépendant de la position du porte-tête de lecture (3) et de moyens de commutation (18) qui, à l'arrêt des deux plateaux d'enroulement (WT1, WT2), commutent un coulisseau d'inversion (2) qui prédétermine le sens de défilement et qui après commutation du porte-tête de lecture passe en position de fonctionnement, dispositif caractérisé en ce que le coulisseau d'inversion (2) comporte deux becs d'encliquetage (20, 21) alignés dans sa direction de déplacement et séparés d'une faible distance, et le porte-tête de lecture (3) précontraint contre la cassette (19) par un ressort (22), coulissant perpendiculairement au coulisseau d'inversion (2), est muni d'une saillie associé aux becs d'encliquetage (20, 21), et cette saillie, après une libération du porte-tête de lecture avant le début de la lecture, est tout d'abord retenu par l'un des becs puis après tension de la bande, par la commutation provoquée par l'arrêt des deux plateaux d'enroulement (WT1, WT2) du coulisseau inverseur, la saillie du porte-tête de lecture quitte sa position de retenue contre le bec d'encliquetage et le porte-tête de lecture libère le verrouillage du plateau d'enroulement (WT1) par le ressort (22).

2. Dispositif de tension de bande selon la revendication 1, caractérisé en ce quele coulisseau d'inversion (2) en matière plastique élastique est dimensionné et monté de façon que ses becs d'encliquetage (20, 21) munis de rampes soient écartées élastiquement lors du passage du porte-tête de lecture (2) de sa position de fonctionnement à sa position de repos, lors du passage de la saillie (23) du porte-tête de lecture (3).

3. Dispositif de tension de bande selon la revendication 1 ou 2, caractérisé en ce quele support de tête (3) est muni d'une autre saillie (24) qui, en position de repos du porte-tête de lecture, pousse un ressort de verrouillage (25) contre sa force dans une denture du plateau d'enroulement (WT1) à verrouiller.
